# EUROPEAN PATENT SPECIFICATION

(11) **EP 1 782 145 B1**
(45) Date of publication and mention of the grant of the patent: **02.12.2015**
(21) Application number: 05790984.8
(22) Date of filing: 23.08.2005
(51) Int. Cl.: G05F 1/10, G05F 1/652, G05F 1/656, H02M 3/158

(54) **SOFT SWITCHING INTERLEAVED POWER CONVERTER**
SANFTSCHALTENDER VERSCHACHTELTER STROMWANDLER
CONVERTISSEUR DE PUISSANCE ENTRELACE DE COMMUTATION LOGICIELLE

(30) Priority: 24.08.2004 US 925832
(43) Date of publication of application: 09.05.2007
(73) Proprietor: ADVANCED ENERGY INDUSTRIES, INC., Fort Collins, CO 80525 (US)
(72) Inventor: HESTERMAN, Bryce, L., Fort Collins, CO 80525 (US); ILIC, Milan, Fort Collins, CO 80528 (US); MALININ, Andrey, B., Fort Collins, CO 80525 (US); SIDDABATTULA, Kalyan N.C., Visakhapatnam, Visakhapatnam AP 530003 (IN)
(74) Representative: Gill, David Alan
(86) International application number: PCT/US2005/029769
(87) International publication number: WO 2006/023846

(56) References cited:
- US-A- 6 147 886
- US-B1- 6 211 657
- US-B1- 6 404 175
- US-B1- 6 426 883
- US-B1- 6 897 641
- US-B1- 6 979 980
- US-B2- 6 560 127
- US-B2- 6 690 589
- US-B2- 6 850 045

## Description

### BACKGROUND OF THE INVENTION

### Field of the Invention

This invention relates generally to a soft switching interleaved power converter, and more particularly, to soft switching buck, buck-boost and boost switch mode power converter suitable for high power and high voltage applications such as plasma processing.

### Brief Description of the Prior Art

It is generally desirable to operate switching power supplies at the highest frequency that is practical for a particular circuit. Operating at higher frequencies allows the inductor and capacitor values in a power supply to be reduced, and this reduces physical size and cost, and also enables improvements in the transient response of the power supply. Reducing the energy available for delivery to plasma arcs is also a desirable goal. High-frequency operation allows the use of smaller output filter capacitors, which store less energy than larger capacitors, and this reduces the energy that can be supplied to plasma arcs.

The operating frequencies prior art power supplies that utilize hard-switching power converters are limited because the switching losses can become prohibitively high as the operating frequency is increased.

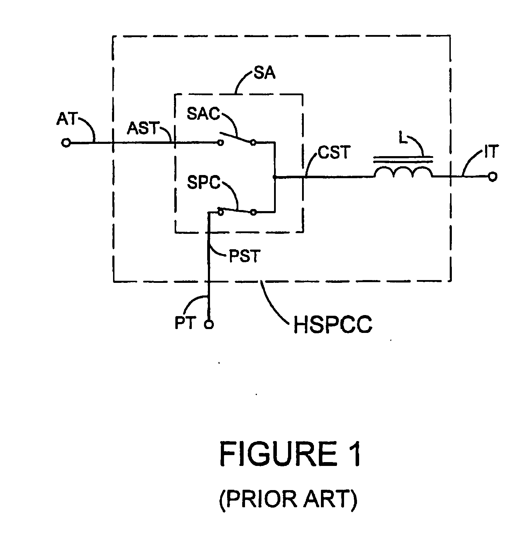

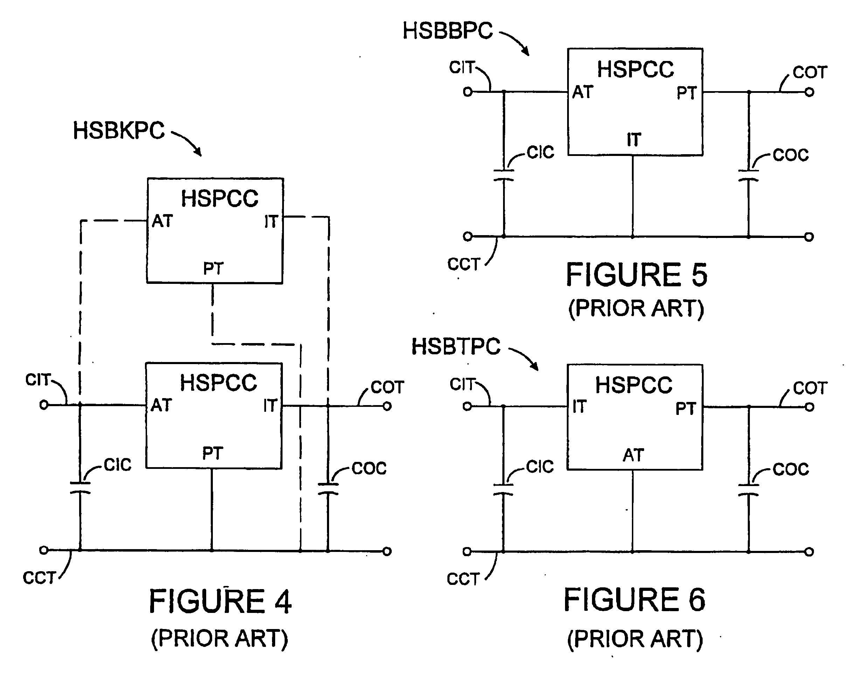

Figure 1 shows a prior art hard-switched power converter cell HSPCC that can be used to implement prior art hard-switched buck, buck-boost and boost power converters as shown in Figures 4-6 respectively. The hard-switched power converter cell HSPCC has three terminals: an active terminal AT, a passive terminal PT, and an inductive terminal IT. The power converter cell is comprised of a switch assembly SA and an inductor L. The switch assembly has an active switch terminal AST that is connected to the active terminal AT, a passive switch terminal PST that is connected to the passive terminal PT and a common switch terminal CST. The inductor L is connected between the common switch terminal CST and the converter inductive terminal IT.

The switch assembly has two switches: switch SAC that is connected between active switch terminal AST and common switch terminal CST, and switch SPC that is connected between passive switch terminal PST and common switch terminal CST. Switch SAC always comprises an active switch such as a transistor, and may also comprise an anti-parallel diode, while the SPC switch may comprise a diode, an active switch or both.

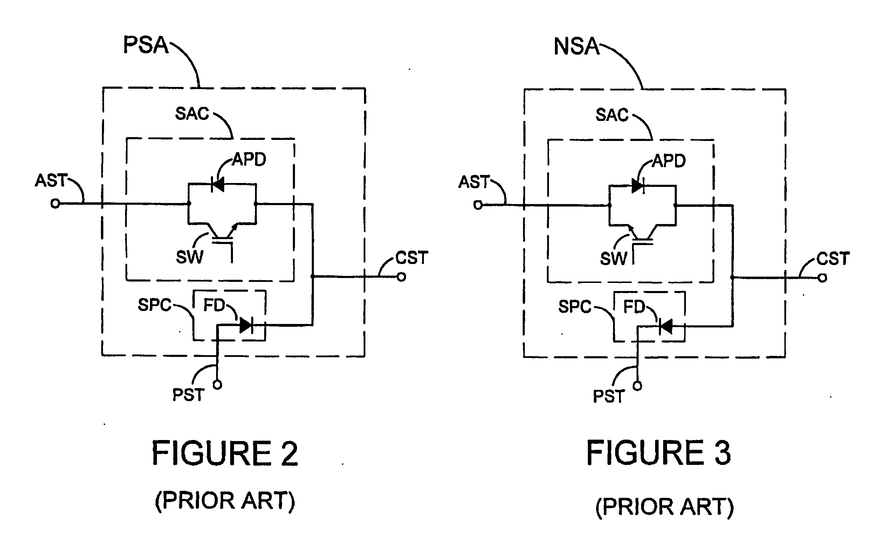

Figures 2 and 3 show two implementations of switch assembly SA in which switch SAC comprises an active switch SA connected in parallel with an anti-parallel diode APD, and in which switch SPC is a freewheeling diode FD. Ideally, the two switches in a switch assembly SA are never on simultaneously, but in hard-switched power that operate in a manner such that the currents in the filter inductors do not reach zero within a switching cycle (continuous conduction mode), a freewheeling diode must be turned off every time a switching transistor is turned on. A reverse current called the reverse-recovery current flows through the freewheeling diodes during the time interval when they are being turned off. The time it takes for a diode to turn off is called the reverse-recovery time. During the reverse-recovery time interval, a large diode reverse-recovery current to flows through the switches while the voltage across them is high. This produces switching losses that may be prohibitively high in hard switching power converters that operate at high voltage and power levels while switching at high frequencies.

Switch assemblies having SPC switches that are implemented as freewheeling diodes may be categorized as positive switch assemblies such as the PSA of Figure 2, or negative switch assemblies such as the NSA of Figure 3. A positive switch assembly blocks current from flowing between the active switch terminal AST and common switch terminal CST while the SAC switch is off and the active switch terminal AST is positive with respect to the common switch terminal CST. A negative switch assembly blocks current from flowing between the common and active switch terminals while the SAC switch is off and the active switch terminal is negative with respect to the common switch terminal.

Figures 4-6 show hard-switched power converters that are implemented with hard-switched power converter cells. Figure 4 shows a hard-switched buck power converter HSBKPC, Figure 5 shows a hard-switched buck-boost power converter HSBPC, and Figure 6 shows a hard-switched boost power converter HSBTPC. Each of the power converters in Figures 4-6 has a converter input terminal CIT, a converter common terminal CCT, and a converter output terminal COT. Input power is supplied between the input and common terminals having an input voltage Vᵢₙ, and power is delivered between the output and common terminals, between which there is an output voltage Vₒᵤₜ. The interconnection arrangement among the power converter cell terminals and the power converter terminals determines whether the power converter is a hard-switched buck power converter HSBKPC, a hard switched buck-boost power converter HSBBPC or a hard switched boost power converter HSBTPC. Each power converter shown in Figures 4-6 has a converter input capacitor CIC connected between the input terminal and the common terminal, and a converter output capacitor COC connected between the output terminal and the common terminal.

Hard-switching power converter cells HSPCC can be implemented with either a set of positive switch assemblies or a set of negative switch assemblies. A positive hard-switched power converter cell is defined as a power converter cell that is implemented with one or more positive switch assemblies. Similarly, a negative hard-switched power converter cell is defined as a power converter cell that is implemented with one or more negative switch assemblies. The choice of whether to use positive or negative power converter cells depends on the polarity of the voltage to be converted and the converter topology. Positive hard-switched power converter cells PHSPCC are used to implement hard-switched buck HSBKPC and hard-switched buck-boost HSBBPC power converters when the input voltage Vᵢₙ is positive (the converter input terminal CIT is positive with respect to the converter common terminal CCT), and also with hard-switched boost power converters HSBTPC that have negative input voltages (the converter input terminal CIT is negative with respect to the converter common terminal CCT). Conversely, negative hard-switched power converter cells NHSPCC are used in hard-switched buck HSBKPC and hard-switched buck-boost HSBBPC power converters that have negative input voltages, and also in hard-switched boost power converters HSBTPC that have positive input voltages.

The dashed lines in Figure 4 indicate that multiple power converter cells may be connected in parallel order to share input and output currents of the power converter among two or more converter cells. Parallel-connected power converter cells are preferably operated with an interleaved switching pattern to reduce ripple in the input and output currents. If N converters are connected in parallel, then the switches are preferably operated with an interleaving phase angle difference of 360°/N. Although it is not shown in Figures 5 and 6, these power converters may also be implemented with parallel-connected power converter cells.

Interleaved hard-switched power converters are generally known in the prior art. They are commonly used for microprocessor VRM applications with very high output currents and very low output voltages. Having a low output voltage allows use of very fast low voltage diodes, so the switching losses are negligible. In general, high voltage diodes turn off more slowly than low voltage diodes, so switching losses are a particular problem for high-frequency power converters that operate at high voltages and high power levels. When hard-switched power converters are used in high-voltage and high-power applications as disclosed in US patent 6,211,657, the switching losses will be considerable when the power converter is operated at high switching frequencies.

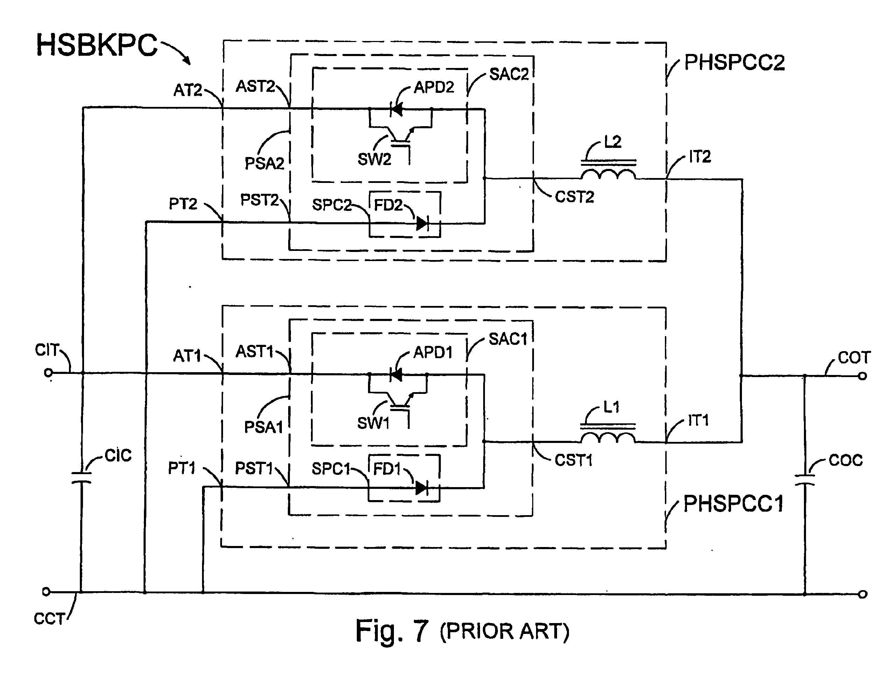

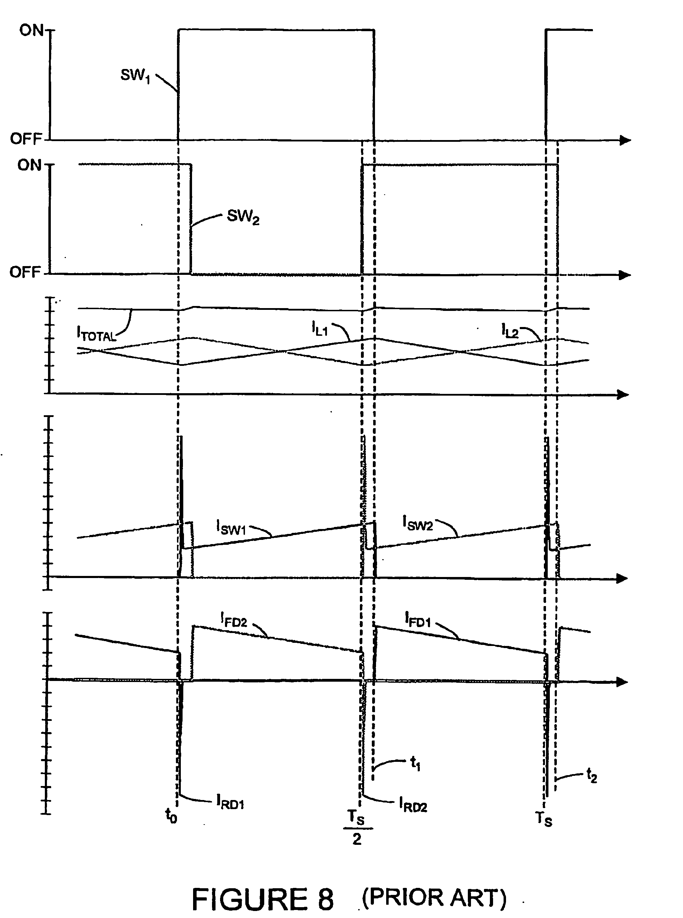

Figure 7 shows a prior art interleaved hard-switched buck power converter HSBKPC that is based on Figures 2 and 4. The power converter has two parallel-connected positive hard switching power converter cells, PHSPCC1 and PHSPCC2, and it is like the interleaved converter disclosed in US patent 6,211,657. Figure 8 shows typical waveforms for an interleaved hard-switched power converter such as the one in Figure 7 in which slower high voltage diodes are used. The current waveform plots of Figure 8 have vertical scales of 10 A per division.

The waveforms in Figure 8 were obtained from a computer simulation of the buck power converter BKPC of Figure 7 with the following characteristics: input voltage Vᵢₙ = 750 VDC, output voltage Vₒᵤₜ = 400 VDC, output current Iₒᵤₜ = 62.5 A, switching period T₅ = 64 µs, 600 µH inductors L1 and L2, and a 10 µF converter output capacitor COC. The capacitance of COC used in the simulation was selected so that the output ripple voltage was negligible, but much smaller capacitors can be used with converters that are intended to operate loads where high-frequency ripple is not critical, such as typical dc plasma loads. The power converter was supplied by an ideal voltage source in the simulation, so the converter input capacitor was not required.

As can be seen in Figure 8, diode FD1 is conducting when switch SW1 turns on at time to. A large reverse-recovery current I_{RD1} flows through FD1 as it is being turned off by SW1. The same thing happens with SW2 and FD2 at time T₅/2. The freewheeling diode waveforms I_{FD1} and I_{FD2} illustrate how the peak reverse-recovery currents I_{RD1} and I_{RD2} of diodes FD1 and FD2 may be greater than their peak forward operating currents. The large reverse-recovery currents of the freewheeling diodes cause high power dissipation in switches SW1 and SW2 because the voltage across the switches is high during the turn-on switching transition interval. The diode reverse-recovery currents also cause considerable power dissipation in the diodes. Just before a diode is fully turned off, the voltage across it rises while current is still flowing, and this produces high turn-off power losses in the diode due to the simultaneous presence of high voltage and high current.

Because the same switching cells are used in hard-switched interleaved buck-boost and boost power converters, these converters have switching waveforms that are similar to the ones illustrated in Figure 8. Large current spikes in the freewheeling diodes also occur in hard-switched non-interleaved power converters.

The turn-on losses in switches due to diode reverse-recovery currents can be reduced by adding circuitry that results in having zero, or relatively low, currents flowing through the switches as they are turned on. The turnoff losses of the diodes can be greatly decreased by reducing the current through them gradually instead of suddenly during the commutation interval.

One prior art approach to reducing switching losses due to diode reverse-recovery currents is to use auxiliary or pilot switches and inductors as taught in US patent 5,307,004. There are two significant drawbacks to this approach. Although the pilot switches and diodes do not process much power in comparison to the main switches and diodes, their sizes are not proportionally smaller in high voltage power converters due to insulation requirements. The cost and size of the driver circuits for the pilot switches are also not proportionally smaller.

US patent 6,184,666 discloses a buck converter with parallel-connected switches that process equal amounts of power and have equal power dissipation, but the converter does not have soft switching. US patent 5,204,809 discloses hard-switched synchronous interleaved buck converters with coupled inductors. It teaches that the coupling coefficient should be less than about 0.9, with the optimal value being around 0.5. US 6,426,883 discloses a power converter that uses equal-sized parallel-connected switching components and commutation inductors to achieve soft switching, but the switching pattern allows only one of the paralleled switches to have soft switching while the other switch has hard switching. In order to balance the switching losses, the switching pattern is periodically reversed so that each switch has soft switching half of the time.

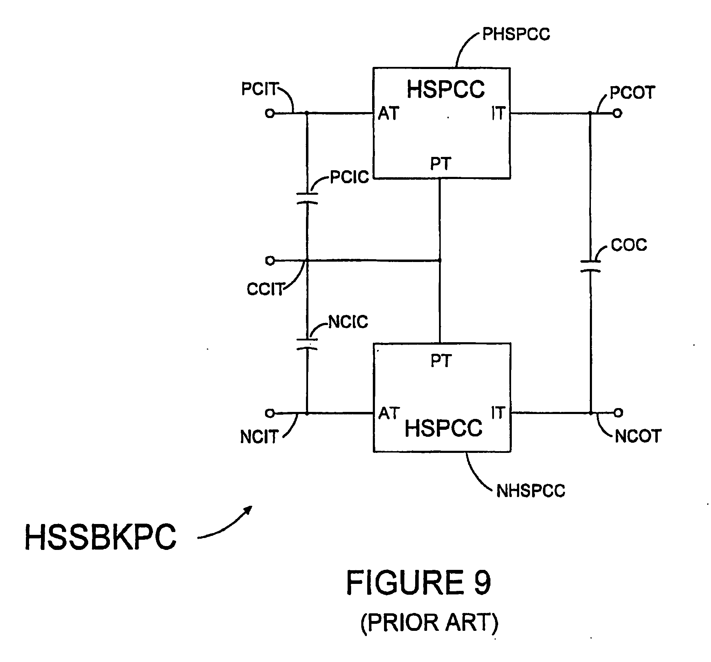

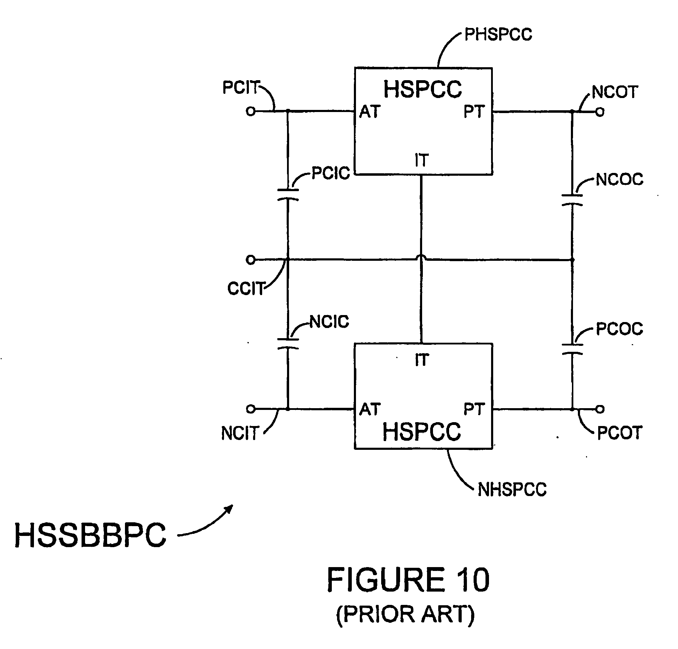

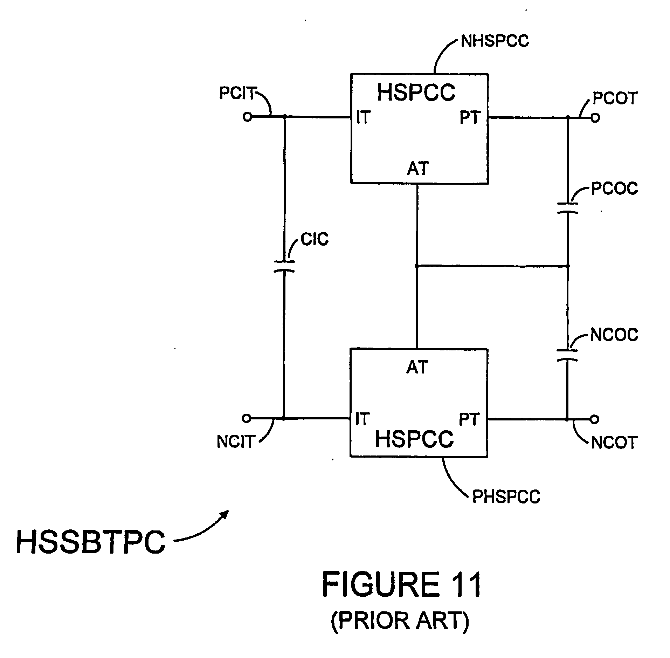

For higher-voltage applications, hard-switched power converter cells can be connected in a stacked arrangement to implement hard-switched stacked buck HSSBKPC power converters, hard-switched stacked buck-boost HSSBEPC power converters and hard-switched stacked boost HSSBTPC power converters as shown in Figures 9, 10 and 11 respectively. Each of these converters has one positive hard-switched power converter cell, PHSPCC, and one negative hard-switched power converter cell, NHSPCC. Stacking two power converter cells in the configurations illustrated in Figures 9-11 allows the operating voltages to be twice those obtainable with non-stacked power converters when using equivalent power converter cells.

US patent 5,932,995 shows that stacked buck converters can be implemented with hard-switched power converter cells. Various hard-switched stacked power converters are described in: Xinbo Ruan et al., "Three-level converters-a new approach for high voltage and high power DC-to-DC conversion," IEEE 2002 Power Electronics Specialists Conference, vol. 2, pp. 663-668. These hard-switched power converters will have high switching losses when operated at high frequencies in high voltage and high power applications.

It would be desirable if there were provided a soft switching power converter suitable for high power and high voltage applications in which the switches have low turn-on losses, and the diodes have low turn-off losses. It would furthermore be desirable if there were provided a soft switching power converter suitable for high power and high voltage applications in which the diodes and switches in parallel-connected switching assemblies process the same level of power, and are operated with a switching pattern that allows soft switching for each parallel-connected switching assembly.

### SUMMARY OF THE INVENTION

There is provided by this invention soft switching interleaved power converters that are suitable for high power and high voltage applications such as plasma processing. They can operate at higher frequencies than prior art converters because they have greatly reduced switching losses and diode reverse-recovery losses. The peak values of the reverse-recovery currents of the diodes are substantially less than their peak forward operating currents. The power converters incorporate power converter cells that comprise a plurality of switching assemblies that are operated with an interleaved switching pattern, and that are each connected to an input terminal of an inductor assembly that also has a common terminal. The inductance between each pair of input terminals is less than the inductance between each input terminal and the common terminal of the inductor assembly.

### BRIEF DESCRIPTION OF THE DRAWINGS

Figure 1 illustrates a prior art hard-switched power converter cell.
Figures 2 and 3 illustrate, respectively, prior art positive and negative switching assemblies.
Figures 4-6 illustrate, respectively, prior art hard-switched buck, buck-boost and boost power converters.
Figure 7 illustrates a prior art hard switching interleaved buck power converter.
Figure 8 illustrates waveforms of the prior art hard switching power converter of Figure 7.
Figures 9-11 illustrate, respectively, prior art hard-switched stacked buck, stacked buck-boost and stacked boost power converters.

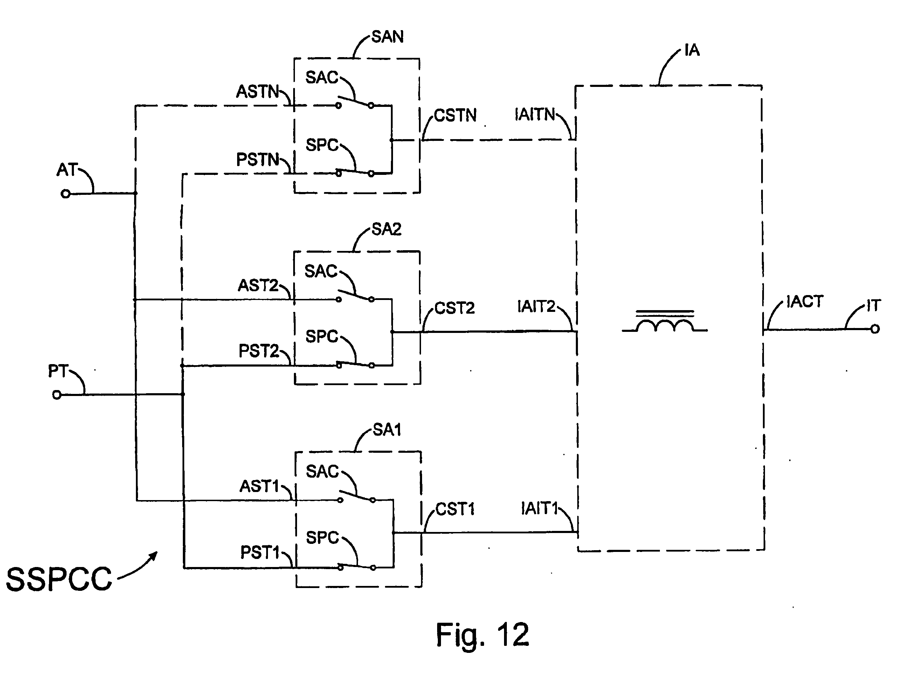

Figure 12 illustrates a soft-switched power converter cell.

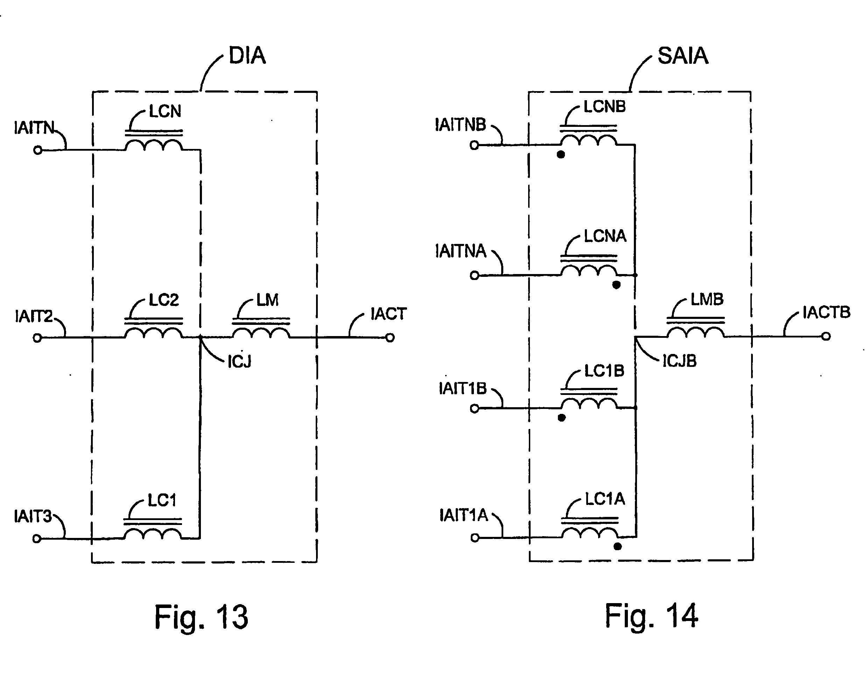

Figures 13-16 illustrate details of various embodiments of the inductor assembly IA of Figure 12.

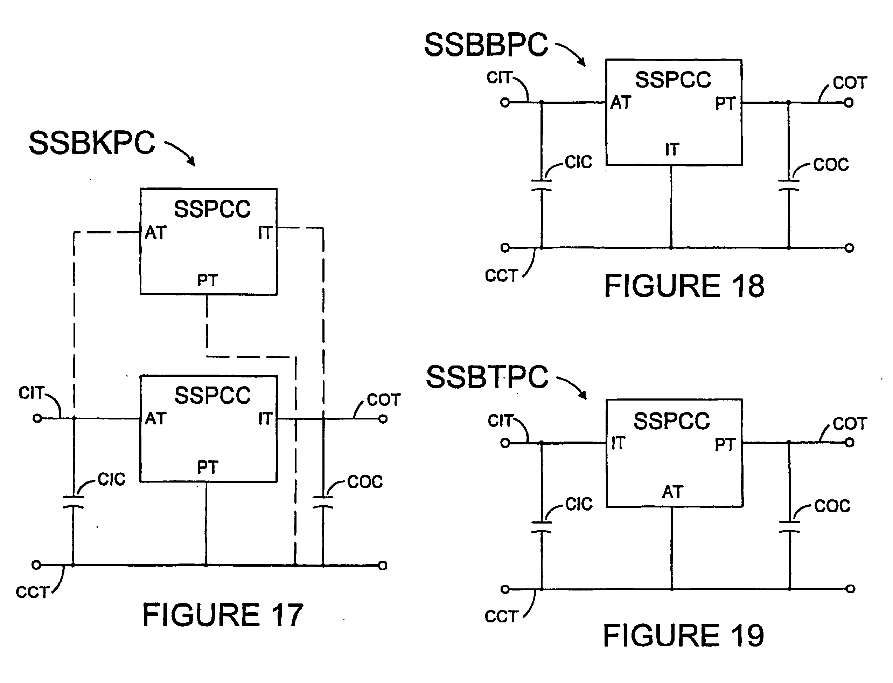

Figures 17-19 illustrate, respectively, soft-switched buck, buck-boost and boost power converters.

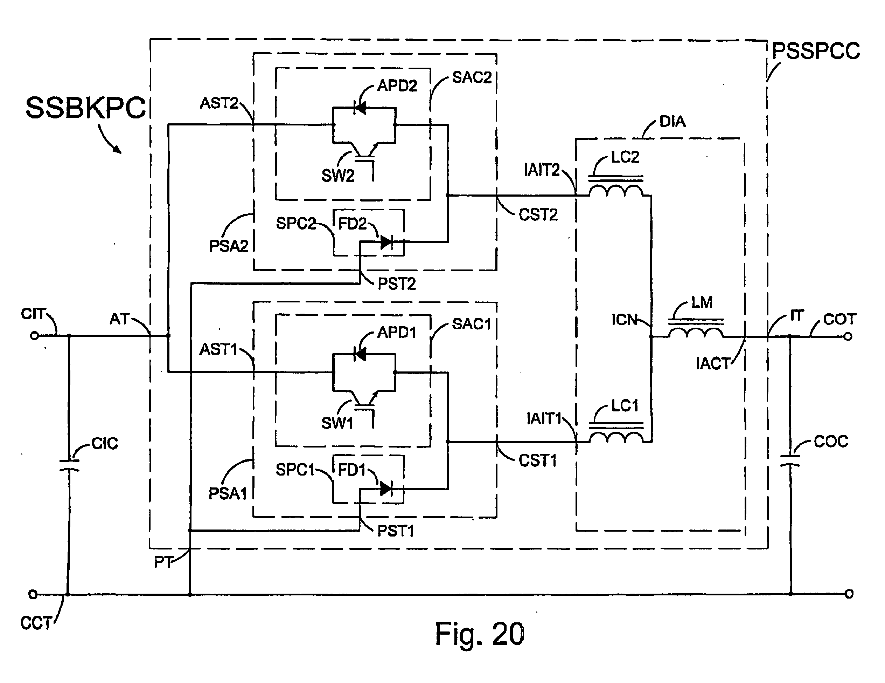

Figure 20 illustrates a soft switching interleaved buck power converter.

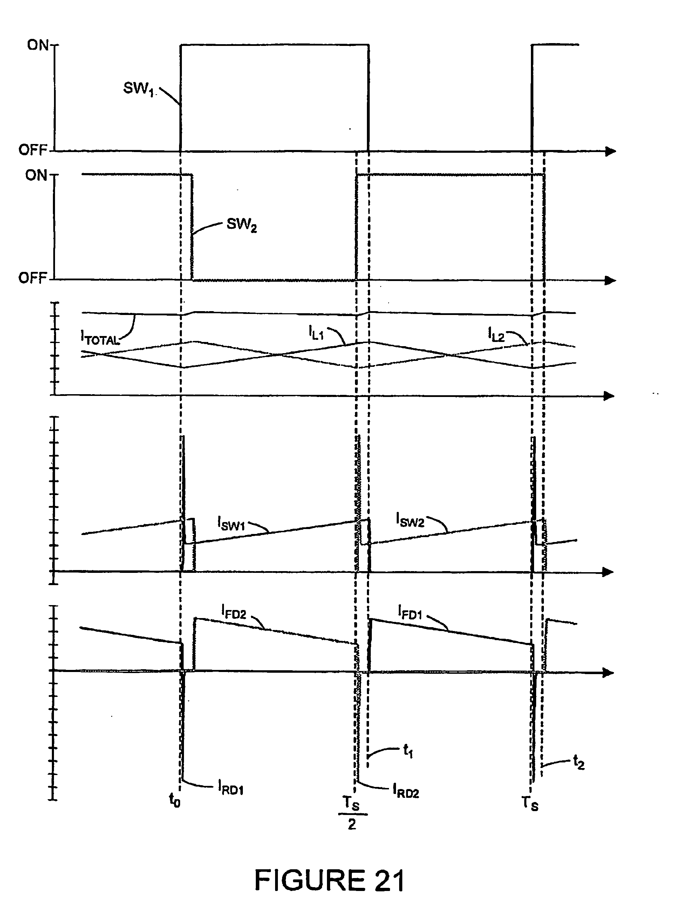

Figure 21 illustrates waveforms of the soft-switched buck power converter of Figure 20.

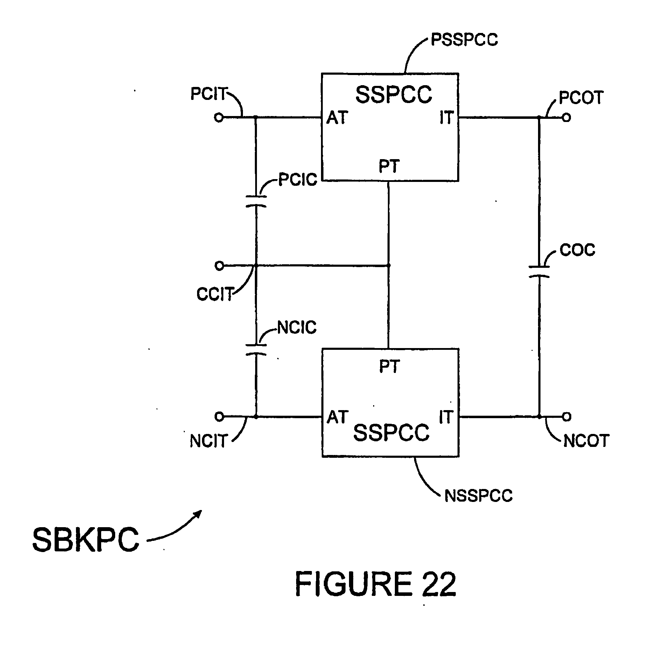

Figure 22 illustrates a soft-switched stacked buck power converter.

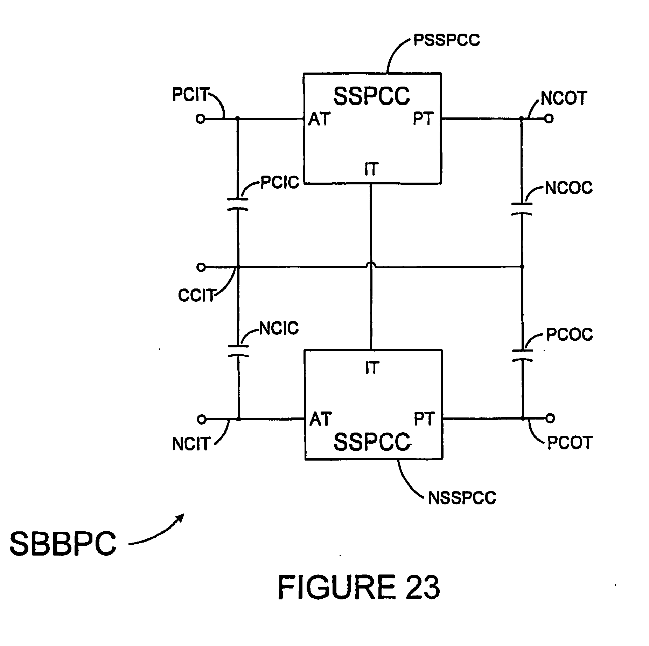

Figure 23 illustrates a soft-switched stacked buck-boost power converter.

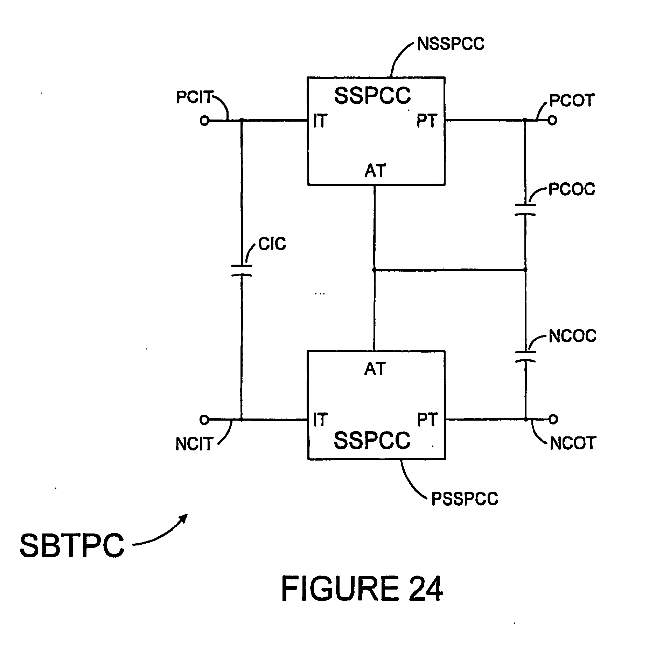

Figure 24 illustrates a soft-switched stacked boost power converter.

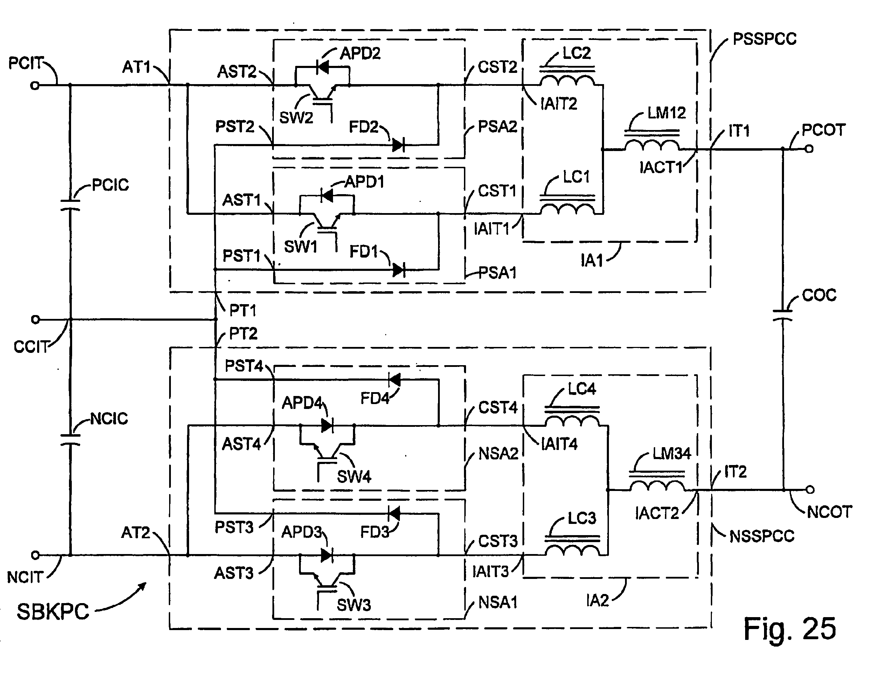

Figure 25 provides a detailed diagram of the soft-switched stacked buck power converter of Figure 22.

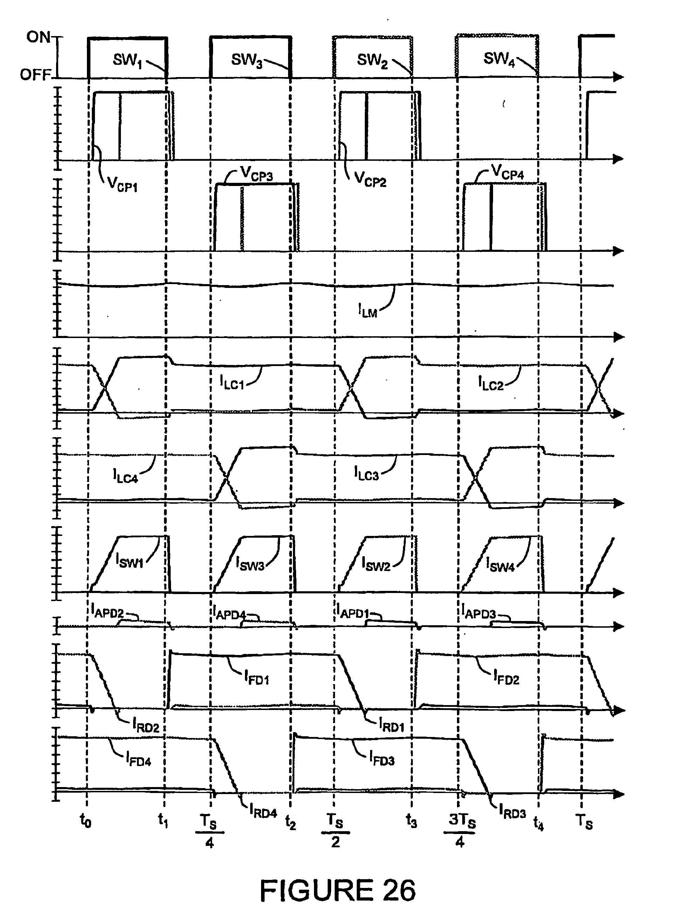

Figure 26 illustrates waveforms of the power converter of Figure 25.

### DETAILED DESCRIPTION OF THE INVENTION

The power converter cells of the present invention are similar in structure to prior art circuits, but they achieve heretofore unknown performance improvements by utilizing inductor assemblies with advantageous structures and inductance values, and by utilizing optimal switching patterns.

Figure 12 illustrates a soft switching power converter cell SSPCC according to the present invention. At least two switching assemblies, SA1 and SA2, are connected to active and passive terminals, AT and PT. The possibility of connecting more switching assemblies, for a total of N is indicated by the dashed connections to the Nth switching assembly SAN. The common terminal of each switch assembly, CST1 ... CSTN is connected to an inductor assembly, IA, at an inductive assembly input terminal, IAIT1 ... IAITN. An inductor assembly common terminal IACT is connected to the inductive terminal IT of the SSPCC power converter cell.

Figures 13-16 show various ways to implement inductor assembly IA. The inductances between pairs of inductor assembly input terminals that are connected to a pair of consecutively operated switching assemblies, Lᵢᵢ, is a critical parameter in producing soft switching operation. The inductance between an inductor assembly input terminal and the inductor assembly common terminal IACT, L_{ic}, influences the magnitude of the ripple current flowing through the inductive terminal of the switching cell. The Lᵢᵢ inductance values are preferably less than one fifth of the inductance of L_{ic}. The inductor assemblies of Figures 13-16 can be constructed so as to have the same inductances the between all corresponding pairs of their terminals. If the inductances between the terminal pairs are equivalent for various inductor assemblies, then the converter waveforms will also be equivalent for the same operating conditions, and the total energy stored in each inductor assembly will be the same.

Figure 13 shows an inductor assembly implementation DIA in which one of N discrete commutation inductors LC1 ... LCN is connected between each inductor assembly input terminal IAIT1 ... IAITN and an inductor common junction ICJ. A main converter inductor LM is connected between junction ICJ and the inductor assembly common terminal IACT. In order to prevent excessively long commutation times, the inductance between inductor assembly input terminals IAIT1 and IAIT2 is preferably less than about one-fifth of the inductance of between each of these terminals and the inductor assembly common terminal IACT. The inductance of the commutation inductors in Figure 13 is therefore preferably less than one-ninth of the inductance of the main inductor LM.

Figure 14 shows an inductor assembly SAIA that has N pairs of commutation inductors connected in a series-aiding coupling arrangement. One inductor is connected between each inductor assembly input terminal IHIT1A ... IAITNA, IAIT1B ... IAITNB and an inductor common junction ICJB. When more than two windings are used in this type of inductor assembly they must come in pairs, and the switching sequence must be ordered so that every successive switching assembly in the sequence is connected to a winding of opposite polarity. The two simplest ways of implementing the coupled commutation inductors LC1A-LC1B ... LCNA-LCNB are to wrap the windings around the center leg of an E-core set, or to wrap them around the same side of a C-core set. Each pair of commutation inductor windings is preferably tightly coupled (coupling coefficient of at least 0.9). The inductances of the commutation inductor windings are preferably nearly equal. The inductance between a pair of inductor assembly input terminals approaches four times the inductance of one winding for tightly coupled windings that are connected in a series-aiding arrangement. The common connection between each pair of windings is connected to a main converter inductor LMB at an inductor common junction ICJB.

The peak energy stored in each of the commutation inductors LC1...LCN of Figure 13 is slightly less than the total peak energy stored in each pair of the coupled commutation inductors IC1A-IC1B...ICNA-ICNB of Figure 14 when the inductances between their corresponding input terminals are the same, the operating conditions are the same, and the peak reverse-recovery currents of the diodes are minimal in comparison to diode forward currents. Thus, the size of the coupled commutation inductors of Figure 14 can be significantly smaller than the combined size an equal number of the discrete commutation inductors of Figure 13. For equivalent inductor assemblies and equivalent operating conditions, there will be slightly more peak energy stored in the main inductor LM of Figure 13 in comparison with the corresponding main inductor LMB of Figure 14 because the total peak energy storage for the two configurations must be equal. This minor increased energy storage requirement for LM, however, has a negligible effect on its physical size.

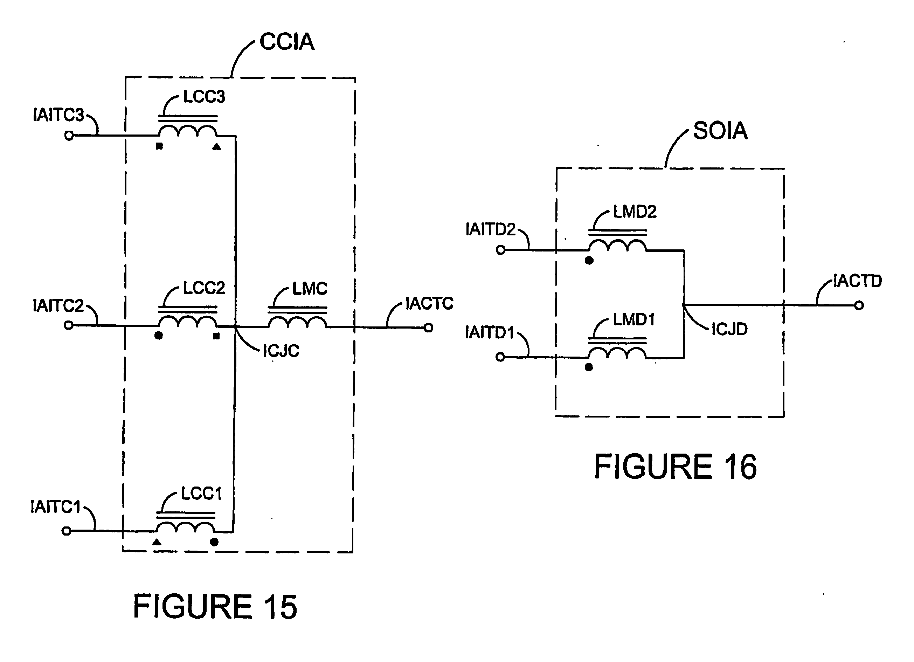

Figure 15 shows an inductor assembly implementation CCIA that has three coupled commutation inductors LLC1...LLC3 that are intended to be driven by three switching assemblies. The commutation inductors could be implemented with three windings wound around three legs of a core similar to what is used in three-phase transformers. The magnitude of the coupling between each winding pair must be less than 0.5, so the relative size reduction possible with this configuration in comparison with three discrete inductors of Figure 13 will generally be less than the relative size reduction possible for two tightly coupled windings of Figure 14 in comparison with two discrete inductors of Figure 13. One commutation inductor is connected to between each inductor assembly input terminal IAICT1...IAICT3 and junction ICJC. A main inductor LMC is connected between junction ICJC and the inductor assembly common terminal IACTC.

Figure 16 shows an inductor assembly SOIA in which two main inductor windings LMD1 and LMD2 are wound on a common core structure with a series-opposing coupling arrangement. There are no commutation inductors, but the diode commutation effect still occurs due to the leakage inductance between the to windings. The inductances between inductor assembly input terminals IAITD1 and IAITD2 and inductor assembly common terminal IACTD are preferably equal, and the inductance between the inductor assembly input terminals is preferably less than one fifth of the inductance between an input terminal and the common terminal IACT. These constraints imply that the coupling coefficient is at least 0.9. The copper utilization for the inductance assemblies of Figure 16 is not as good as for those of Figures 13-15 because the currents in the main windings are discontinuous. The configuration shown in Figure 14 with one pair of windings is the preferred embodiment of the inductor assembly.

The previously described preferred values of the ratios between inductance values in the various implementations of inductor assembly IA are derived from typical diode commutation times and typical ripple current levels in the main inductors, and therefore they are merely guidelines for illustration, and not primary design constraints.

Figures 17-19 illustrate, respectively, a soft-switched buck power converter SSBKPC, a buck-boost power converter SSBBPC, and a boost power converter SSBTPC. These power converters utilize soft-switched power converter cells (implementations of SSPCC of Figure 12) instead of the hard-switched power converter cells that are used in the prior art power converters of Figures 4-6. The orientations of the soft-switched power converter cells in soft-switched power converters and their polarities are the same as is described above for the hard-switched power converters.

Figure 20 illustrates an implementation of the soft-switched buck power converter SSBKPC of Figure 17 that has a positive soft-switched power converter cell PSSPCC with two positive switch assemblies PSA1 and PSA2 that are constructed as illustrated in Figure 2. (In contrast, NSSPCC in Figure 25 is a negative soft-switched power converter cell.) The inductor assembly IA is the type shown in Figure 13, and has two discrete commutation inductors LC1 and LC2, and a main inductor LM. Additional commutation inductors and switching assemblies may be connected as shown in Figure 13, with N switching assemblies preferably operated with an interleaving phase angle difference of 360°/N. The inductances of the commutation inductors are preferably equal. The preferred embodiment, however, is when the two commutation inductors are tightly coupled as shown in Figure 14.

Figure 21 illustrates waveforms of the soft switching buck power converter SSBKPC in Figure 20. The waveforms were obtained from a computer simulation with the following characteristics: input voltage Vᵢₙ = 750 VDC, output voltage Vₒᵤₜ = 400 VDC, output current Iₒᵤₜ = 62.5 A, switching period T₅ = 64 µs, 600 µH main inductor, two discrete 20 µH commutation inductors, and a 10 µF converter output capacitor. The current waveform plots of Figure 21 have vertical scales of 10 A per division.

As with the simulation that produced the waveforms of Figure 8, the capacitance of COC used in this simulation was selected so that the output ripple voltage was negligible, but much smaller capacitors can be used with converters that are intended to operate loads where high-frequency ripple is not critical, such as typical dc plasma loads. Having low output capacitance is desirable for plasma loads because this reduces the energy that may be delivered to arcs. The SSPCC was supplied by an ideal voltage source in the simulation, so the converter input capacitor was not required.

The voltage between common switch terminal CST1 and passive switch terminal PST1 is labeled as V_{CP1}, and the voltage between CST2 and PST2 is labeled as V_{CP2}. The current through freewheeling diode FD1, I_{FD1}, is very small when switch SW1 is turned on at time t₀, so the peak reverse-recovery current I_{RD1} of FD1 is also very small. At time t₀, the current through FD2, I_{FD2}, is equal to the current through LC2, and slightly less than the main inductor current, I_{LM}. After SW1 turns on, the current through it ramps up as the current in FD2 ramps down. The slope of the current transition in amperes/second is equal to Vᵢₙ/Lᵢᵢ, where Lᵢᵢ = LC1 + LC2. The same type of current transition takes place for the currents in SW2 and FD2 following the time T₅/2.

The current through commutation inductor LC2 reverses as FD2 is being turned off, and when FD2 finally turns off, this current causes the voltage at CST2 to ring up until anti-parallel diode APD2 conducts. The voltage at CST1 rings down immediately after SW1 turns off at time t₁, and FD1 then begins to conduct, picking up the main inductor current. APD2 turns off with a small reverse-recovery current shortly after SW1 turns off, and the voltage at CST2 rings down until FD2 begins to conduct due to the small current flowing in LC2. SW2 turns on at time T₅/2, and because there is little, if any, current flowing through FD2 at that time, SW2 turns on without a large current spike, just as SW1 did at time to.

The soft switching characteristics of the soft-switched power converter cells of the present invention provide power savings in the switches and diodes that allow converter circuits using these cells to operate at higher frequencies than with circuits that use prior art hard-switched power converter cells. Operating at higher frequencies allows the inductor and capacitor values to be reduced, and this reduces physical size and cost. Higher frequency operation also enables improvements in the transient response of the converters and reduces the energy available for delivery to plasma arcs.

In hard-switched power converters, the diode current is very rapidly reversed from the forward conduction mode to the reverse conduction mode. The waveforms of Figure 21, however, illustrate that during the commutation intervals of the soft switching power converter cell PSSPCC following to and T₅/2, the diode current drops at a relatively slow rate of about 19 A/µs, which allows significant recombination to occur in the diode junction before the diode current is reversed. Consequently, the peak reverse-recovery currents I_{RD1} and I_{RD2} are low (about one-fifth of the output current), and this produces low diode turn-off losses and low turn-on losses for the switches. In contrast, Figure 8 illustrates that the diode currents in the hard-switched power converter cell PHSPCC of Figure 7 drop at a rate of about nearly 1000 A/µs, resulting in a large peak reverse-recovery currents I_{RD1} and I_{RD2} that are 35 percent greater than the output current. This produces high diode turn-off losses and high turn-on losses for the switches. The optimal current reduction slope for typical high voltage power diodes ranges from about 20 A/µs to 100 A/µs. The optimal reverse-recovery and commutation times may decrease as diode technologies are improved.

The time required to bring the diode current to zero, T_{z}, is approximately equal to IₒᵤₜLᵢᵢ/Vᵢₙ, where Lᵢᵢ = LC1 + LC2. The total commutation time, T_{cl}, is equal the sum of T_{z} and the reverse-recovery time of the freewheeling diodes FD, t_{rrf}**.** In Figure 21, the diode current reaches zero in about 3 µs, and, the diode reverse-recovery time t_{rrf} is about 1 µs. The total commutation time, T_{cl}**,** is therefore about 4 µs, which is one-sixteenth of the 64 µs switching period, Tₛ.

The voltage conversion ratio M of a power converter cell is defined as the steady-state ratio of the average voltage between the inductive and passive terminals, Vᵢₚ, divided by the average voltage between the active and passive terminals, Vₐₚ. In hard-switched power converter cells operating in continuous conduction mode, the conversion ratio is ideally (with lossless components) equal to the duty ratio, D, of the SAC switches: M = Vᵢₚ/Vₙₚ **=** D. Thus, the ideal steady-state voltage conversion ratio V_{out/}Vᵢₙ of hard-switched power converters operating in continuous conduction mode is only a function of the duty cycle, and is independent of the converter output current. The voltage conversion ratio is nearly equal to the ideal value in high-voltage hard-switched power converters.

In contrast, the voltage conversion ratio M for soft-switched power converter cells of the present invention operating in continuous conduction mode is reduced as the output current increases, even with ideal components, because of the effects of the total commutation time T_{cl}, and the reverse-recovery time of the anti-parallel diodes Tᵣₘ on the average terminal-terminal voltages of the converter cell. In the soft-switched power converter cell PSSPCC of Figure 20, the voltage between junction ICJ and the passive terminal PT is equal to half of the voltage between the active an passive terminals during the commutation interval T_{ct} and also during the reverse-recovery interval Tᵣₘ of the anti-parallel diodes. Consequently, the ideal value of M for a soft-switched power converter cell SSPCC, which has N sets of switch assemblies is equal to:
M = Vᵢₚ/Vₐₚ = N·[D - 0.5(T_{cl} + Tᵣₘ)/Tₛ] when the power converter cell is operating in continuous conduction mode, and the sum of T_{cl} and Tᵣₘ is less than the duration of the conduction intervals of the SAC switches, D·Tₛ. Soft switching is lost when the sum of T_{cl} and Tᵣₘ reaches the duration of the conduction intervals of the SAC switches. The ideal value of M is never less than N·D/2 when the power converter is operating in continuous conduction mode.

Because both T_{cl} + Tᵣₘ are directly related to the output current, the output voltage of a buck power converter BKPC (which is proportional to M) will droop as the output current is increased. For example, with the soft-switched buck power converter SSBKPC of Figure 20 operating with a duty cycle D = 0.25, the maximum output voltage at light loads is half of the input voltage, but the output voltage drops to one-fourth of the input voltage at heavy loads when the sum of T_{cl} and Tᵣₘ equals or exceeds the duration of the conduction intervals of the SAC switches, D·T₅.

The maximum duty cycle of the switches is preferably 1/N. Increasing the duty cycle beyond this does not increase the conversion ratio M, and causes the soft-switching effect to be lost In contrast, the duty cycle of the switches in the prior art hard-switched interleaved buck converter of Figure 7 must use the full 0 to 1 duty cycle range to cover the full output voltage range when the inductors are operating in continuous conduction mode.

The total commutation time is preferably less than one-tenth of T for buck power converters BKPC that must achieved output voltages close to the input voltage when fully loaded. Longer commutation times may be acceptable for situations in which the ability of the converter to deliver power is not unduly effected. The fact that M is a function of the output current creates a damping effect in the transient response of the power converter may sometimes be useful. For example, when a soft-switched buck power converter SSBKPC is used to supply a plasma load that has a negative incremental impedance, this effect may help stabilize the power supply because it increases the output impedance of the power converter.

Instead of connecting more than two switching assemblies to one inductor assembly, it is preferable to operate two or more soft switching power converter cells SSPCC of the same polarity in parallel as shown in Figure 17, with interleaved switching between the converter cells. The switching pattern of two interleaved soft switching power converter cells is shown in Figure 26, which illustrates the waveforms of the stacked buck converter SBKPC of Figure 25. When two soft-switched buck power converter cells are stacked in that way, however, they must be of opposite polarities. When two interleaved soft-switched power converter cells are operated in parallel they will have the ripple cancellation effect that occurs in prior art interleaved converters such as the one in Figure 7. The combined current of the two inductors in Figure 7, Iₜₒₜₐₗ, has much less ripple than the current in each inductor. The ripple cancellation effect is illustrated in the inductor current waveforms of Figure 8, but it is lacking in the inductor waveforms of Figure 21 because the power converter of Figure 20 is interleaved.

Implementing the buck-boost and boost converters of Figures 18 and 19 with the soft-switched power converter cells of the present invention provides the same type of performance improvements that are afforded to the buck converter, and the switching waveforms have the same shapes as those in Figure 20.

Figure 22-24 show how to connect two soft-switched power converter cells to form, respectively, a soft-switched stacked buck power converter SBKPC, a soft-switched stacked buck-boost power converter SBBKPC, and a soft-switched stacked boost power converter SBTPC. These circuits allow the input and output voltages to be twice what they could be for single power converters with the same voltage ratings for the switches and diodes. They are particularly useful for power supplies that operate plasma loads because high output voltages are usually required. The stacked power converters have positive and negative power converter input terminals PCIT and NCIT, and positive and negative power converter output terminals PCOT and NCOT.

In the soft-switched stacked buck power converter SBKPC of Figure 22, a positive soft-switched power converter cell PSSPCC is connected between a positive input terminal PCIT and an intermediate terminal CCIT. A negative soft-switched power converter cell NSSPCC is connected between CCIT and the negative input terminal NCIT. The two power converter cells are preferably operated in an interleaved manner. The SBKPC can receive power from two stacked power supplies that have a common connection at terminal CCIT. It the switching duty cycles of the two power converter cells are balanced, one power supply may be connected between PCIT and NCIT, with CCIT left floating. This also applies to the soft-switched stacked buck-boost power converter SBBPC of Figure 23.

Figure 26 illustrates waveforms for the soft-switched stacked buck converter SBKPC of Figure 25. Each soft-switching power converter cells is shown with two switching assemblies per inductor assembly, but they could be implemented with N switching assemblies, where N is greater than 1. As with the soft switching buck power converter BKPC of Figure 15, the maximum duty cycle of the switches is preferably 1/N. The switches in each soft-switched stacked power converter cell are preferably operated with an interleaving phase angle difference of 360°/N, while the switching patterns of the two cells are also preferably interleaved, which gives an effective interleaving phase angle difference between two stacked power converter cells PPCC of 180°/N. The inductances of the commutation inductors are preferably equal.

The voltages between junctions CST1 through CST4 and CCIT are respectively illustrated as waveforms V_{CP1} through V_{CP4}. The waveforms for each power converter cell are essentially the same as those for Figure 20, except that the ripple current in the main inductors, I_{LM} is reduced because of the interleaving between the two power converter cells. As is shown in Figure 26, the ripple current frequency in LM12 and LM34 is twice the switching frequency of the switches. This is similar to the ripple canceling effect that occurs with parallel-connected interleaved power converter cells, but it has the advantage that both of the inductors have reduced ripple currents instead of just having cancellation in the sum of the two main inductor currents. With two parallel-connected interleaved power converters, the ripple in the sum of the main inductor ripple currents is almost totally cancelled when the switch duty cycles are 50 percent. With stacked interleaved power converters, the ripple currents in the main inductors are almost totally cancelled when the switch duty cycles are 25 percent.

The waveforms were obtained from a computer simulation with the following characteristics: input voltage Vᵢₙ = 750 VDC between PCIT and CCIT, and between CCIT and NCIT (1500 VDC total), output voltage Vₒᵤₜ=400 VDC, output current Iₒᵤₜ = 62.5 A, switching period Tₛ= 64 µs, 300 µH main inductors, two discrete 20 µH commutation inductors per inductor assembly, and a 10 µF converter output capacitor. The SBKPC was supplied by two ideal voltage sources so the converter input capacitors PCIC and NCIC were not required.

As with the simulations that produced the waveforms of Figures 8 and 21, the capacitance of COC used in the simulation was selected so that the output ripple voltage was negligible, but much smaller capacitors can be used with converters that are intended to operate loads where high-frequency ripple is not critical, such as typical dc plasma loads. Having low output capacitance is desirable for plasma loads because this reduces the energy that may be delivered to arcs.

Implementing the soft-switched stacked buck-boost and boost power converters of Figures 23 and 24 with soft-switched power converter cells PSSPCC and NSSPCC provides the same type of performance improvements that are afforded to the soft-switched stacked buck power converter, and the switching waveforms have the same shapes as those in Figure 26.

In the stacked buck power converter SBPPC, of Figure 25, it can be seen that the main inductors LM12 and LM34 are effectively connected in series with the converter output capacitor COC. Consequently, one of these main inductors could be eliminated, but it is preferable to have both main inductors because they can reduce electromagnetic noise interference (EMI) problems by providing significant high frequency impedance between the switching devices and the load. Similarly, the main inductor could be eliminated from one of the power converter cells in the stacked power converters of Figures 23 and 24, but it is preferable to have both main inductors. The main inductors of the stacked soft-switch power converters preferably have essentially the same inductance, and if they do, they may be wound on a common core with the coupling polarities oriented in a series-aiding manner. For example, the soft switching buck power converter SBKPC of Figure 22 can be implemented with LM12 and LM34 being wound on a common core, and with the windings oriented so that the terminals connected to IT1 and IT2 have opposite polarities.

Although there is illustrated and described specific structure and details of operation, it is clearly understood that the same were merely for purposes of illustration and that changes and modifications may be readily made therein by those skilled in the art without departing from the scope of this invention.

## Claims

1. A soft switching interleaved power converter comprising:
a) a converter input terminal, a converter output terminal and a converter common terminal, wherein power is received between the converter input terminal and the converter common terminal, and an output current is delivered to a load connected between the converter output terminal and the converter common terminal;
b) a soft switching power converter cell having an active terminal, a passive terminal and an inductive terminal, with these three terminals each being connected to one of the three said converter terminals; the soft switching power converter cell having an inductor assembly and a least two switch assemblies (SA1, SA2);
c) each switch assembly having an active switch terminal (AT), a passive switch terminal (PT) and a common switch terminal (CSTN);
d) the inductor assembly (IA) having a separate inductor assembly input terminal (IAITN) connected to one of each said common switch terminals (CSTN), and an inductor assembly common terminal (IACT) connected to said inductive terminal of the soft switching power converter cell, the inductor assembly having an input-input inductance value between a pair of inductor assembly input terminals that is less than the inductance between any inductor assembly input terminal and the inductor assembly common terminal; and
e) each switch assembly having a switch (SW1, SW2) connected between the active switch terminal and the common switch terminal, and a diode connected between the passive switch terminal and the common switch terminal, the switches being operated in an interleaved manner so that the action of a first switch in a switch assembly being turned on during a switch conduction interval causes a diode (FD1,FD2) in another of said switch assemblies to be turned off subsequently to the first switch being turned on, the turning off of the diode occurring during a commutation interval of the inductor assembly, each diode having a peak forward operating current (IFD1,IFD2) and a peak reverse-recovery current (IRD1,IRD2) as it is being turned off.

2. A power converter as claimed in Claim 1 and comprising a soft switching stacked interleaved power converter wherein:
the converter input terminal comprises a positive converter input terminal (PCIT) and a negative converter input terminal (NCJT);
the converter output terminal comprises a positive converter output terminal (PCOT) and a negative converter output terminal (NCOT), wherein the power is received between the positive converter input terminal and the negative converter input terminal, and the output current is delivered to a load connected between the positive converter output terminal and the negative converter output terminal;
the soft switching power converter cell comprises:
a positive soft switching power converter cell having an active terminal (AT) a passive terminal (PT) and an inductive terminal (IT) one of these three terminals being connected to a converter input terminal, and the second of these three terminals connected to a converter output terminal;
a negative soft switching power converter cell having an active terminal, a passive terminal and an inductive terminal, one of these three terminals being connected to a converter input terminal, and the second of these three terminals connected to a converter output terminal;
the third of the three terminals of said positive soft switching power converter cell connected to the corresponding third terminal of said negative soft switching power converter cell;
the positive soft switching power converter cell and the negative soft switching power converter cell each having a said inductor assembly and at least two switch assemblies.

3. The soft switching interleaved power converter of Claims 1 or 2 wherein said input-input inductance values of said inductor assemblies are selected such that the magnitudes of said peak reverse-recovery currents of the diodes are substantially less than the magnitude of said peak forward operating currents.

4. The soft switching interleaved power converter of Claims 1 or 2 wherein the diodes in said switch assemblies of the soft switching positive power converter cell and the diodes in the switch assemblies of the soft switching negative power converter cell are oriented with opposite polarities such that current flows out of the common terminal of the inductor assembly in the positive soft switching positive power converter cell, and current flows into the common terminal of the inductor assembly in the negative soft switching power converter cell.

## Patentansprüche

1. Resonant schaltender verschachtelter Stromrichter, der Folgendes umfasst:
a) eine Stromrichtereingangsklemme, einer Stromrichterausgangsklemme und einer Stromrichtermasseklemme, wobei der Strom zwischen der Stromrichtereingangsklemme und der Stromrichtermasseklemme empfangen wird und ein Ausgangsstrom einer Last zugeführt wird, die zwischen der Stromrichterausgangsklemme und der Stromrichtermasseklemme geschaltet ist;
b) eine resonant schaltende Stromrichterzelle mit einer aktiven Klemme, einer passiven Klemme und einer induktiven Klemme, wobei diese drei Klemmen jeweils mit einer der drei genannten Stromrichterklemmen verbunden sind; wobei die resonant schaltende Stromrichterzelle eine Induktorbaugruppe und wenigstens zwei Schalterbaugruppen (SA1, SA2) aufweist;
c) wobei jede Schalterbaugruppe eine aktive Schalterklemme (AT), eine passive Schalterklemme (PT) und eine Masseschalterklemme (CSTN) aufweist;
d) wobei die Induktorbaugruppe (IA) eine separate, mit einer der genannten Masseschalterklemmen (CSTN) verbundene Induktorbaugruppen-Eingangsklemme (IAITN) und eine mit der genannten induktiven Klemme der resonant schaltenden Stromrichterzelle verbundene Induktorbaugruppen-Masseklemme (IACT) aufweist, wobei die Induktorbaugruppe einen Eingang-Eingang-Induktanzwert zwischen einem Paar Induktorbaugruppen-Eingangsklemmen hat, der kleiner ist als die Induktanz zwischen einer beliebigen Induktorbaugruppen-Eingangsklemme und der Induktorbaugruppen-Masseklemme; und
e) wobei jede Schalterbaugruppe einen zwischen der aktiven Schalterklemme und der Masseschalterklemme geschalteten Schalter (SW1, SW2) und eine zwischen der passiven Schaltklemme und der Masseschaltklemme geschaltete Diode aufweist, wobei die Schalter auf verschachtelte Weise betätigt werden, so dass die Wirkung eines während eines Schaltleitungsintervalls eingeschalteten ersten Schalters in einer Schalterbaugruppe bewirkt, dass eine Diode (FD1, FD2) in einer anderen der genannten Schalterbaugruppen nach dem Einschalten des ersten Schalters ausgeschaltet wird, wobei das Ausschalten der Diode während eines Kommutationsintervalls der Induktorbaugruppe erfolgt, wobei jede Diode einen Spitzendurchlassbetriebsstrom (I_{FD1}, I_{FD2}) und einen Spitzensperrverzögerungsstrom (I_{RD1}, I_{RD2}) hat, wenn sie ausgeschaltet wird.

2. Stromrichter nach Anspruch 1, der einen resonant schaltenden, geschichteten, verschachtelten Stromrichter umfasst, wobei:
die Stromrichtereingangsklemme eine positive Stromrichtereingangsklemme (PCIT) und eine negative Stromrichtereingangsklemme (NCIT) hat;
die Stromrichterausgangsklemme eine positive Stromrichterausgangsklemme (PCOT) und eine negative Stromrichterausgangsklemme (NCOT) hat, wobei der Strom zwischen der positiven Stromrichtereingangsklemme und der negativen Stromrichtereingangsklemme empfangen wird und wobei der Ausgangsstrom einer Last zugeführt wird, die zwischen der positiven Stromrichterausgangsklemme und der negativen Stromrichterausgangsklemme geschaltet ist;
wobei die resonant schaltende Stromrichterzelle Folgendes umfasst:
eine positive resonant schaltende Stromrichterzelle mit einer aktiven Klemme (AT), einer passiven Klemme (PT) und einer induktiven Klemme (IT), wobei eine dieser drei Klemmen mit einer Stromrichtereingangsklemme verbunden ist und die zweite dieser drei Klemmen mit einer Stromrichterausgangsklemme verbunden ist;
eine negative resonant schaltende Stromrichterzelle mit einer aktiven Klemme, einer passiven Klemme und einer induktiven Klemme, wobei eine dieser drei Klemmen mit einer Stromrichtereingangsklemme verbunden ist und die zweite dieser drei Klemmen mit einer Stromrichterausgangsklemme verbunden ist;
wobei die dritte der drei Klemmen der genannten positiven resonant schaltenden Stromrichterzelle mit der entsprechenden dritten Klemme der genannten negativen resonant schaltenden Stromrichterzelle verbunden ist;
wobei die positive resonant schaltende Stromrichterzelle und die negative resonant schaltende Stromrichterzelle jeweils eine genannte Induktorbaugruppe und wenigstens zwei Schalterbaugruppen umfassen.

3. Resonant schaltender verschachtelter Stromrichter nach Anspruch 1 oder 2, wobei die genannten Eingang-Eingang-Induktanzwerte der genannten Induktorbaugruppen so ausgewählt sind, dass die Größen der genannten Spitzensperrverzögerungsströme der Dioden erheblich kleiner sind als die Größe der genannten Spitzendurchlassbetriebsströme.

4. Resonant schaltender verschachtelter Stromrichter nach Anspruch 1 oder 2, wobei die Dioden in den genannten Schalterbaugruppen der resonant schaltenden positiven Stromrichterzelle und die Dioden in den Schalterbaugruppen der resonant schaltenden negativen Stromrichterzelle mit entgegengesetzten Polaritäten orientiert sind, so dass Strom aus der Masseklemme der Induktorbaugruppe in der positiven resonant schaltenden positiven Stromrichterzelle fließt und Strom in die Masseklemme der Induktorbaugruppe in der negativen resonant schaltenden Stromrichterzelle fließt.

## Revendications

1. Un convertisseur de puissance entrelacé à commutation logicielle comprenant :
a) une borne d'entrée de convertisseur, une borne de sortie de convertisseur et une borne commune de convertisseur, où une puissance est reçue entre la borne d'entrée de convertisseur et la borne commune de convertisseur, et un courant de sortie est fourni à une charge raccordée entre la borne de sortie de convertisseur et la borne commune de convertisseur,
b) une cellule de convertisseur de puissance à commutation logicielle possédant une borne active, une borne passive et une borne inductive, ces trois bornes étant chacune raccordée à une borne des trois dites bornes de convertisseur, la cellule de convertisseur de puissance à commutation logicielle possédant un ensemble inducteur et au moins deux ensembles commutateurs (SA1, SA2),
c) chaque ensemble commutateur possédant une borne de commutateur active (AT), une borne de commutateur passive (PT) et une borne de commutateur commune (CSTN),
d) l'ensemble inducteur (IA) possédant une borne d'entrée d'ensemble inducteur distincte (IAITN) raccordée à une de chacune desdites bornes de commutateur communes (CSTN) et une borne commune d'ensemble inducteur (IACT) raccordée à ladite borne inductive de la cellule de convertisseur de puissance à commutation logicielle, l'ensemble inducteur possédant une valeur d'inductance entrée-entrée entre une paire de bornes d'entrée d'ensemble inducteur qui est inférieure à l'inductance entre toute borne d'entrée d'ensemble inducteur et la borne commune d'ensemble inducteur, et
e) chaque ensemble commutateur possédant un commutateur (SW1, SW2) raccordé entre la borne de commutateur active et la borne de commutateur commune et une diode raccordée entre la borne de commutateur passive et la borne de commutateur commune, les commutateurs étant actionnés d'une manière entrelacée de sorte que l'action d'un premier commutateur dans un ensemble commutateur qui est activé au cours d'un intervalle de conduction de commutateur amène un diode (FD1, FD2) dans un autre ensemble desdits ensembles commutateurs à être désactivée suite à l'activation du premier commutateur, la désactivation de la diode se déroulant au cours d'un intervalle de commutation de l'ensemble inducteur, chaque diode possédant un courant de fonctionnement direct de crête (I_{FD1}, I_{FD2}) et un courant de régénération inverse de crête (I_{RD1}, I_{RD2}) au moment où elle est désactivée.

2. Un convertisseur de puissance selon la Revendication 1 et comprenant un convertisseur de puissance entrelacé empilé à commutation logicielle où :
la borne d'entrée de convertisseur comprend une borne d'entrée de convertisseur positive (PCIT) et une borne d'entrée de convertisseur négative (NCIT),
la borne de sortie de convertisseur comprend une borne de sortie de convertisseur positive (PCOT) et une borne de sortie de convertisseur négative (NCOT), où la puissance est reçue entre la borne d'entrée de convertisseur positive et la borne d'entrée de convertisseur négative, et le courant de sortie est fourni à une charge raccordée entre la borne de sortie de convertisseur positive et la borne de sortie de convertisseur négative,
la cellule de convertisseur de puissance à commutation logicielle comprend :
une cellule de convertisseur de puissance à commutation logicielle positive possédant une borne active (AT), une borne passive (PT) et un borne inductive (IT), une de ces trois bornes étant raccordée à une borne d'entrée de convertisseur et la deuxième de ces trois bornes étant raccordée à une borne de sortie de convertisseur,
une cellule de convertisseur de puissance à commutation logicielle négative possédant une borne active, une borne passive et une borne inductive, une de ces trois bornes étant raccordée à une borne d'entrée de convertisseur et la deuxième de ces trois bornes étant raccordée à une borne de sortie de convertisseur,
la troisième des trois bornes de ladite cellule de convertisseur de puissance à commutation logicielle positive étant raccordée à la troisième borne correspondante de ladite cellule de convertisseur de puissance à commutation logicielle négative,
la cellule de convertisseur de puissance à commutation logicielle positive et la cellule de convertisseur de puissance à commutation logicielle négative possédant chacune un dit ensemble inducteur et au moins deux ensembles commutateurs.

3. Le convertisseur de puissance entrelacé à commutation logicielle selon les Revendications 1 ou 2 où lesdites valeurs d'inductance entrée-entrée desdits ensembles inducteurs sont sélectionnées de sorte que les magnitudes desdits courants de régénération inverses de crête des diodes soient sensiblement inférieures à la magnitude desdits courants de fonctionnement directs de crête.

4. Le convertisseur de puissance entrelacé à commutation logicielle selon les Revendications 1 ou 2 où les diodes dans lesdits ensembles commutateurs de la cellule de convertisseur de puissance positive à commutation logicielle et les diodes dans les ensembles commutateurs de la cellule de convertisseur de puissance négative à commutation logicielle sont orientées avec des polarités opposées de sorte qu'un courant s'écoule de la borne commune de l'ensemble inducteur dans la cellule de convertisseur de puissance positive à commutation logicielle positive et un courant s'écoule dans la borne commune de l'ensemble inducteur dans la cellule de convertisseur de puissance à commutation logicielle négative.
